# EUROPEAN PATENT SPECIFICATION

(11) **EP 0 487 899 B1**
(45) Date of publication and mention of the grant of the patent: **02.08.1995**
(21) Application number: 91118085.9
(22) Date of filing: 23.10.1991
(51) Int. Cl.: F24J 2/06, F24J 2/28, C25B 1/04

(54) **Gas heating apparatus**
Vorrichtung zum Heizen eines Gases
Dispositif de chauffage d'un gaz

(30) Priority: 30.10.1990 JP 290876/90
(43) Date of publication of application: 03.06.1992
(73) Proprietor: MITSUBISHI JUKOGYO KABUSHIKI KAISHA, Tokyo (JP)
(72) Inventor: Yamauchi, Yasuhiro, c/o Nagasaki Technical Inst., Nagasaki-shi, Nagasaki-ken (JP); Komori, Akito, c/o Nagasaki Technical Inst., Nagasaki-shi, Nagasaki-ken (JP)
(74) Representative: Henkel, Feiler, Hänzel & Partner

(56) References cited:
- FR-A- 2 296 703
- US-A- 4 030 890
- US-A- 4 135 489
- US-A- 4 318 393
- PATENT ABSTRACTS OF JAPAN vol. 4, no. 45 (M-6) 9 April 1980 & JP-A-55 014 462 ( BRIDGESTONE CORP. ) 31 January 1980
- PATENT ABSTRACTS OF JAPAN vol. 15, no. 345 (C-86) 3 September 1991 & JP-A-3 134 190 ( MITSUBISHI HEAVY IND LTD ) 7 June 1991

## Description

### BACKGROUND OF THE INVENTION:

### Field of the Invention:

The present invention relates to a steam electrolyzing apparatus making use of radiation heat such as solar heat or the like, which is especially available in a sunlight receiving section for heating steam of a solar heat electric generator, a working gas heating section of a solar heat driven Stirling engine, and a high-temperature heat exchanger of a high-temperature gas-cooled reactor (HTGR).

### Description of the Prior Art:

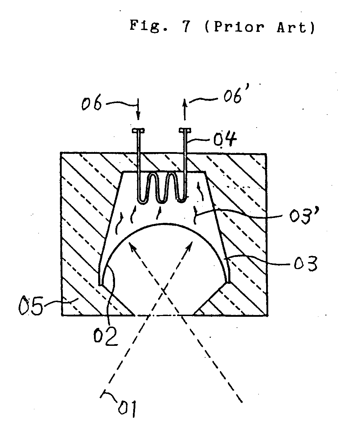

In Fig. 7 is shown a sunlight gas heating apparatus in the prior art. In this apparatus, sunlight 01 is received by an absorber plate 02, thereby liquid metal 03 existing on the rear surface of this absorber plate 02 is heated to generate liquid metal vapor 03', and by means of this liquid metal vapor 03', a heat-exchanger 04 through which heating gas is passing, is heated by transmission of condensation heat. The entire gas heating apparatus is thermally insulated by heat-insulating material 05. It is to be noted that in this figure, reference numeral 06 designates an inlet of gas to be heated, and numeral 06' designates an outlet of gas to be heated.

Also, as a steam electrolyzing apparatus, heretofore, for example, an apparatus shown in Fig. 8 has been known (Japanese Patent Application No. 1989-271238).

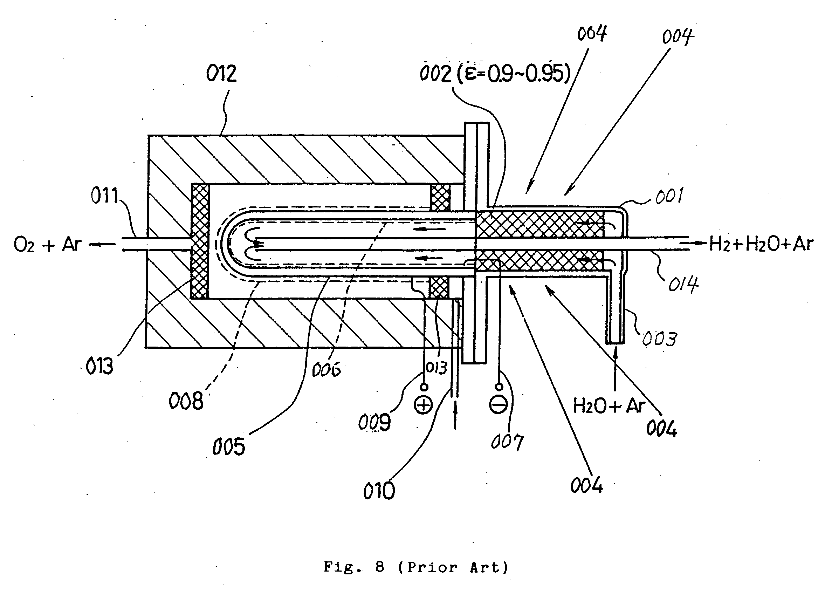

In Fig. 8, steam is fed jointly with argon gas serving as carrier gas through a steam inlet pipe 003 into a light receiving section consisting of a porous ceramic section 002 contained in a quartz glass vessel 001. Steam heated up to 1000°C by focused sunlight 004 in the porous ceramic section 002, is fed into an electrolyzing cell 005 formed of a cylinder of yttria-stabilized zirconia (hereinafter called YSZ), and when a D.C. voltage is applied between a negative electrode 007 connected to a hydrogen electrode 006 made of platinum or YSZ cermet of nickel and a positive electrode 009 connected to an oxygen electrode 008 made of platinum or lanthanum type probschite type oxides (LaCoO₃, LaMnO₃, LaCrO₃, etc.), steam is electrolyzed, and hydrogen is produced on the side of the hydrogen electrode 006, while oxygen is produced on the side of the oxygen electrode 008. The produced oxygen is discharged to the outside through an oxygen outlet pipe 011 by the argon gas fed through a carrier gas inlet pipe 010. The electrolyzing cell 005 is covered by a heat-insulating vessel 012 for the purpose of maintaining the temperature within the cell 005 constant and also preventing dissipation of heat. In addition, in order to maintain the temperature uniform, sometimes a porous ceramic section 013 is provided at the carrier gas inlet pipe 010 and at the oxygen outlet pipe 011. It is to be noted that reference numeral 014 designates a hydrogen outlet pipe penetrating through the porous ceramic section 002 and the quartz glass vessel 001 for discharging the produced hydrogen jointly with argon gas and residual steam.

The above-described sunlight gas heating apparatus in the prior art shown in Fig. 7 involved the following problems to be resolved. That is, the above-described apparatus in the prior art involved the problems that since liquid metal is used as a heating medium, handling of the liquid metal is troublesome, as the heating temperature is determined by a boiling point of liquid metal, it is difficult to heat to an arbitrary temperature, and layout of the apparatus is limited because of the fact that circulation of liquid metal is effected by the gravity.

Also, in the steam electrolyzing apparatus in the prior art shown in Fig. 8, in the case of operating a high-temperature steam electrolyzing apparatus under a pressurized condition, because of the fact that since a porous ceramic section is held in contact with a transparent quartz tube, if they are heated up to a high temperature, a mechanical strength of the quartz tube serving as a light receiving section vessel is degraded, the apparatus cannot be used under a pressurized condition.

A solar energy conversion system for transferring energy from focused solar radiation to a circulating gas is described in US-A-4 135 489. In this system a receiver comprises a porous ceramic section formed as a cylindrical member and arranged within a transparent light receiving vessel surrounding the porous ceramic section so as to leave a gas passageway between an inner surface of the light receiving vessel and an outer surface of the ceramic section cylinder.

Another radiant heat collector element utilizing gas as heating medium is disclosed in JP-A-55 014 462. This collector element also has a light receiving vessel in which a porous ceramic section platelike collector is disposed so as to partly define a gas passageway between the inner surface of the vessel and the outer surface of the plate like collector.

### SUMMARY OF THE INVENTION:

It is an object of the present invention to provide an improved steam electrolyzing apparatus, in which a temperature of a light receiving section vessel is not raised, hence a mechanical strength of the vessel is not degraded, and so, heating under a pressurized condition is possible.

According to the present invention, there is provided a steam electrolyzing apparatus which uses a gas heating apparatus having a solar heat condenser, said apparatus comprising a light focusing section including a porous ceramic section disposed within a transparent light receiving section vessel and disposed to be heatable by radiation, a flow passageway through which gas is directed and movable from one side of said porous ceramic section to the other side thereof passing through said porous ceramic section, an electrolyzing cell including an oxygen electrode and a hydrogen electrode disposed on inner and outer surfaces of a cylindrical electrolyte, and a heat-insulating vessel covering said electrolyzing cell, said flow passageway is defined between an inner surface of the light receiving section vessel and an outer surface of said porous ceramic section, and said electrolyzing cell is heated by high temperature gas flown through said porous ceramic section.

Owing to the above-described structural feature, the radiant gas heating apparatus used in the present invention offers the following advantages.

Generally, in the case of directly heating gas by radiation, since an emissivity of gas is small (0.2 to 0.3), a radiation heat flux is small and a heat transfer area becomes large. On the other hand, an emissivity of solid is large (0.8 - 0.9) as compared to gas, and so, a heat transfer area can be made smaller in the case where after solid has been heated by radiation, gas is heated by convectional heat transfer from solid to gas. When a porous ceramic section (porosity: 0.8 - 0.99) is used, as a representative pore diameter of a ceramics structure is made to be small in order to enlarge a porosity, a coefficient of heat transfer from solid (the ceramic structure in this case) heated by radiation to gas is large, also a heat transfer area is large and a transit pressure loss of gas is small. Consequently, by means of a porous ceramic section having a small volume, a lot of heat can be given to gas.

Hence, owing to the above-described construction that a flow passageway through which gas is movable from one side of a porous ceramic section disposed to be heatable by radiation to the other side thereof passing through the porous ceramic section, is provided, radiation heat can be efficiently extracted by gas.

Also, since a porous ceramic section is used instead of liquid metal as a heating medium, the apparatus is not subjected to limitation of a heating temperature due to a boiling point.

In addition, since exchange of heat does not rely upon circulation of liquid metal, but is effected by gas directly passing through a porous ceramic section, it is almost not influenced by the gravity, and accordingly, a freedom of the arrangement and attitude of the apparatus is high.

Specifically, in the steam electrolyzing apparatus according to the present invention, by making cold gas before heating pass through a space between a porous ceramic section and a transparent light receiving section vessel made of quartz or the like, the light receiving section vessel is cooled by the cold gas, and the temperature of the light receiving section vessel does not rise. In addition, the light receiving section vessel and the cold gas have high transmissivities for sunlight, and so, they are hardly heated directly by sunlight or secondary radiation from the porous ceramic section. Hence, according to the present invention, even if gas is heated up to a high temperature of 1000°C or higher under a pressurized condition, degradation of a mechanical strength of a light receiving section vessel would not occur because the temperature of the vessel does not rise.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a longitudinal cross-section view of an essential part for explaining a feature of the present invention;
Fig. 2 is a vertical cross-section view of an entire construction of the above-mentioned embodiment;
Fig. 3 is a schematic layout view for explaining another feature of the present invention;
Fig. 4 is a schematic layout view for further illustration of the present invention;
Fig. 5 is a longitudinal cross-section view of a preferred embodiment of the present invention;
Fig. 6 is a longitudinal cross-section view of another preferred embodiment of the present invention;
Fig. 7 is a longitudinal cross-section view of a radiant gas heating apparatus in the prior art; and
Fig. 8 is a vertical cross-section view of a steam electrolyzing apparatus in the prior art.

### DESCRIPTION OF THE PREFERRED EMBODIMENTS:

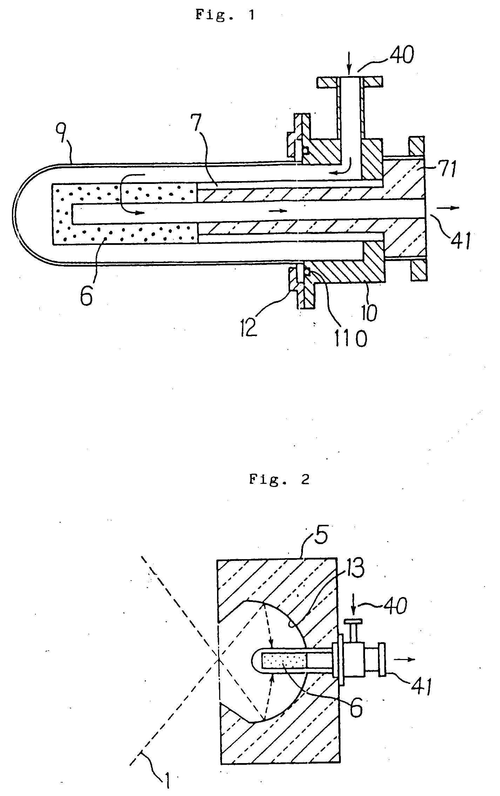

Now an embodiment for explaining a feature of the present invention will be described with reference to Figs. 1 and 2. An essential part of the embodiment is shown in cross-section in Fig. 1, and the entire construction of the same embodiment is shown in cross-section in Fig. 2. Referring now to Fig. 1, a porous ceramic cylinder 6 made of porous ceramic section (made of alumina, SiC, zirconia or the like) and having one end closed is mounted to an alumina tube 7 whose inside is thermally insulated by a heat-insulating material 71, by means of an inorganic group adhesive, and this assembly mounted in a transparent vessellike quartz glass tube 9, which is in turn mounted to a main body 10 made of metal by means of an O-ring 11 and a presser metal 12, as shown in the figure.

Heated gas is fed through a gas inlet 40 into a space between the quartz glass tube 9 and the porous ceramic cylinder 6, and after it has passed through a flow passageway formed between the quartz glass tube 9 and the porous ceramic cylinder 6, it passes through the porous ceramic cylinder 6 and flows in the alumina tube 7, and it is discharged from a gas outlet 41 provided at an end portion of the heat-insulating material 71. As shown in Fig. 2, this heating unit is mounted in a heat-insulating material 5 and a spherical reflector plate 13, and thereby the entire apparatus is constructed.

Next, description will be made on an operation of the above-described construction.

In Fig. 2, if sunlight 1 focused by a parabolic reflection mirror is made to incise through an opening of the reflector plate 13, the porous ceramic cylinder 6 is heated by the sunlight 1, and when the gas entered through a gas inlet 40 and passed through the flow passageway between the quartz glass tube 9 and the porous ceramic cylinder 6 passes through the porous ceramic cylinder 6, it is heated by the porous ceramic cylinder 6. Then the heated gas flows out through the gas outlet 41, and feeds a necessary amount of heat to the outside. When the radiant gas heating apparatus according to the illustrated embodiment is employed, since a heat resistance of the porous ceramic section is extremely high, there is an advantage that gas can be heated up to a temperature of 1000°C to 2000°C by focusing the sunlight. It is to be noted that the limit of heating is determined by a heat resistant temperature of the porous ceramic section. Furthermore, owing to the fact that gas at a low temperature flows through the flow passageway between she quartz glass tube 9 and the porous ceramic cylinder 6, the quartz glass tube 9 is cooled and its temperature would not rise.

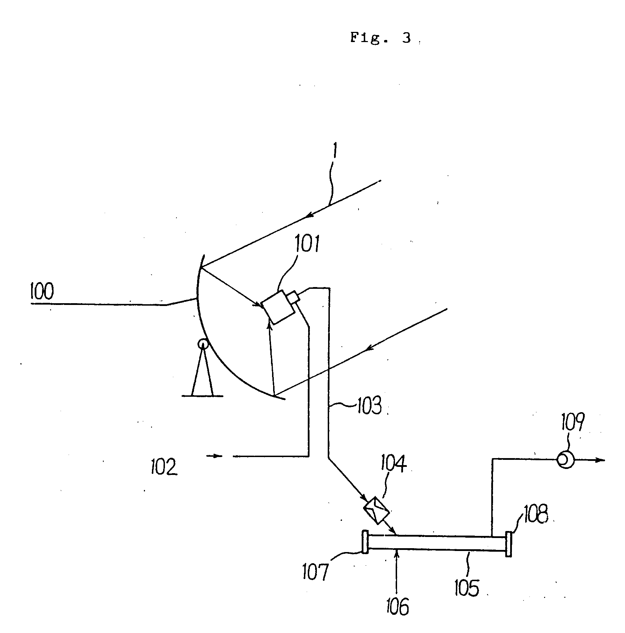

Next, a second embodiment for explaining another feature of the present invention will be described with reference to Fig. 3.

Fig. 3 illustrates a CO₂ gas dynamic laser system making use of sunlight 1. In this system, N₂ gas is heated from 1000°C to 1400°C by making use of a radiant gas heating apparatus 101 disclosed above as a first embodiment for explaining a feature of the present invention, then it is accelerated in a nozzle 104 and mixed with CO₂ gas within a dynamic gas laser 105 to generate laser oscillation. The apparatus is constructed in such manner that N₂ gas and CO₂ gas within the CO₂ gas dynamic laser 105 may be exhausted to the outside of the CO₂ gas dynamic laser 105 by means of a vacuum pump 109. It is to be noted that reference numeral 107 designates a reflection mirror for use in a laser, and numeral 108 designates an output side reflection mirror.

Explaining now the operation of the above-described construction, a radiant gas heating apparatus 101 is disposed at a focal point of a solar heat condenser 100, and N₂ gas fed to this apparatus 101. High-temperature N₂ gas 103 heated up to 1000°C or higher is fed to a nozzle 104, where it is accelerated, and it is mixed with CO₂ gas 106 within a CO₂ gas dynamic laser 105, and laser oscillation is generated by exciting the CO₂ gas 106.

According to the illustrated embodiment, an output power is proportional to the temperature of the high-temperature N₂ gas 103, and there is an advantage that since a high temperature can be easily realized if the sunlight 1 is used, a high output power can be obtained.

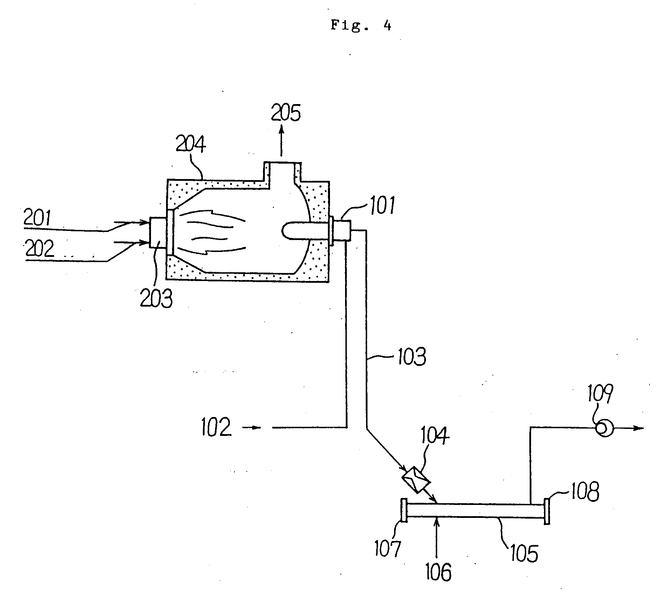

Next, another embodiment for further illustration of the present invention will be explained with reference to Fig. 4. It is to be noted that component members similar to those included in the second embodiment are given like reference numerals, and further description thereof will be omitted.

Fig. 4 is an illustration of a combustion heating type CO₂ gas dynamic laser system. This system is constructed in such manner that fuel 201 such as propane, LNG or the like is used as a heating source for N₂ gas, a radiation gas heater 101 is disposed within a combustion furnace 204, in which the fuel is burnt with air 202 by means of a burner 203 to heat the N₂ gas, and then the N₂ gas 103 is accelerated by a nozzle 104 and mixed with CO₂ gas within a CO₂ gas dynamic laser 105 so that laser oscillation can be effected. In contrast to the fact that in the second embodiment, the sunlight was used as a heating source, this third embodiment differs only in that fuel is used, and the other construction and operation are similar to those of the second embodiment.

As the radiation gas heater 101 is sealed by a quartz glass tube 9, N₂ gas to be heated and a combustion gas serving as a heating gas do not mix with each other, hence even if heating is effected by means of a combustion gas, impurity gas would not mix in the N₂ gas, and good laser oscillation is generated. This embodiment has a merit that even at a place where the sunlight is not available, a high output laser can be obtained easily.

As described above, according to the first to third embodiments explaining features of the present invention, since a porous ceramic cylinder 6 is heated by the sunlight 1 or radiation heat in a combustion furnace 204 and heat is taken out by making general gas, N₂ gas or the like flow passing (penetrating) through a porous ceramic cylinder 6, there is an advantage that high-temperature heat can be obtained in an extremely efficient manner as compared to the example in the prior art making use of liquid metal which is subjected to limitation by a boiling point, and as a result, a high output power can be obtained.

In addition, because of the fact that as a thermal medium, liquid metal which necessitates circulation is not used but a porous ceramic cylinder 6 is employed, the apparatus is almost not subjected to limitation caused by the gravity, but has a merit that arrangement and an attitude of the apparatus can be chosen relatively freely.

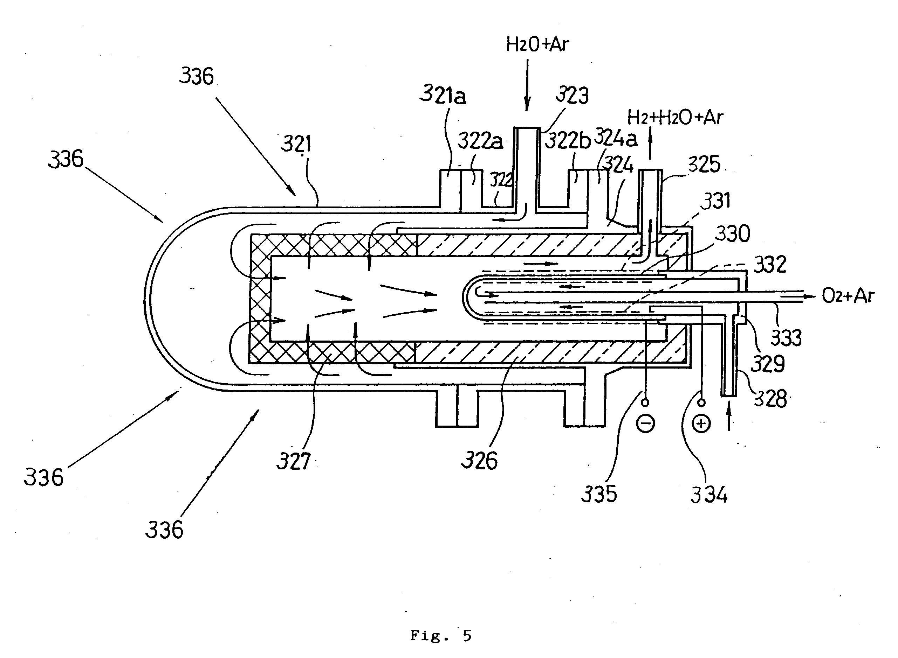

Now a preferred embodiment of the present invention will be described with reference to Fig. 5. In this figure, reference numeral 321 designates a light receiving section vessel made of quartz glass having one end (on the right side) opened and having a flange 321a mounted to this open end. On the opening side of this light receiving section vessel 321 is fixed an outer cylinder 322 having its opposite ends opened and provided with flanges 322a and 322b at the respective ends with the flange 322a butting against a flange 321a of the light receiving section vessel 321. On the above-described outer cylinder 322 is provided a steam inlet pipe 323 through which H₂O + Ar is fed. To the above-mentioned outer cylinder 322 is fixed an inner cylinder 324 having a flange 324a with the flange 324a butting against the flange 322b of the outer cylinder 322. The end (on the left side) of a cylinder main body of the aforementioned inner cylinder 324 extends up to the inside of the right end portion of the above-described light receiving section vessel 321. In the above-described inner cylinder 324 is provided a hydrogen outlet pipe 325.

On the inside of the cylinder main body of the above-mentioned inner cylinder 324 is provided a heat-insulating vessel 326. Here, the heat-insulating vessel 326 is provided so as to cover an electrolyzing cell 330 which will be described later, and this is for the purpose of maintaining the temperature within the electrolyzing cell 330 constant and preventing thermal diffusion. In addition, at the left end portion of the cylinder main body of the inner cylinder 324 is disposed a porous ceramic section (light receiving section) 327 contiguously to the end of the above-mentioned heat-insulating vessel 326 in such manner that a most part thereof may be positioned on the side of the above-described light receiving section vessel 321. At the right end portion of the above-described inner cylinder 324 is provided an opening, and a cylinder member 329 having a carrier gas inlet pipe 328 is mounted to this opening and an opening of the above-described heat-insulating vessel 326. At one end portion (on the left side) of the above-described cylinder member 329 is equipped an electrolyzing cell 330 which is made of material pervious to O₂ ion (ion conductive material) having one end (the right end) opened. Along the outside of this electrolyzing cell 330 is provided a hydrogen electrode 331, and along the inside thereof is provided an oxygen electrode 332. At the right end portion of the above-described cylinder member 329 is provided an opening, and to this opening is mounted an oxygen outlet pipe 333 so as to extend up to the proximity of the left end portion of the above-described electrolyzing cell 330. It is to be noted that in Fig. 5, reference numeral 334 designates a positive electrode connected to the oxygen electrode 332, numeral 335 designates a negative electrode connected to the hydrogen electrode 331, and numeral 336 designates focused sunlight.

Operations of the thus constructed steam electrolyzing apparatus are as follows.

At first, steam is fed jointly with argon serving as a carrier gas from a steam inlet pipe 323 into a light receiving section consisting of a porous ceramic section 327 contained in the above-described light receiving section vessel 321 through a space between the light receiving section and the light receiving section vessel 321. Here, the porous ceramic section 327 has been heated up by the focused sunlight 326, and so, when the steam and argon gas pass through the porous ceramic section 327, they are heated by the porous ceramic section 327 and their temperature is raised up to about 1000°C.

The heated steam is fed to the electrolyzing cell 330, and if a D.C. voltage is applied between a negative electrode 336 connected to the hydrogen electrode 331 of the electrolyzing cell 330 and a positive electrode 334 connected to the oxygen electrode 332, steam is electrolyzed, and hydrogen is produced on the side of the hydrogen electrode 331, while oxygen is produced on the side of the oxygen electrode 332. The produced oxygen is carried by the argon gas fed through the carrier gas inlet pipe 328 and is exhausted to the outside through an oxygen outlet pipe 333.

In this way, in the steam electrolyzing apparatus according to the above-described preferred embodiment of the present invention, by making cold gas before heating pass through the space between the porous ceramic section 327 and the light receiving section vessel 321 made of quartz glass, the light receiving section vessel 321 is cooled by the cold gas, and so, the temperature of the light receiving section vessel 321 would not rise. In addition, the light receiving section vessel 321 and the cold gas has a high transmissivity of sunlight, and so, they are hardly heated directly by the sunlight or by secondary radiation of the porous ceramic section 327. Hence, according to the present invention, since the temperature of the light receiving section vessel 321 would not rise even if gas is heated up to a high temperature of 1000°C or higher under a pressurized condition, degradation of a mechanical strength of the light receiving section vessel would not occur.

It is to be noted that in the above-described preferred embodiment, for the purpose of making the temperature uniform, a porous ceramic section could be provided in the carrier gas inlet pipe 328 and the oxygen outlet pipe 333.

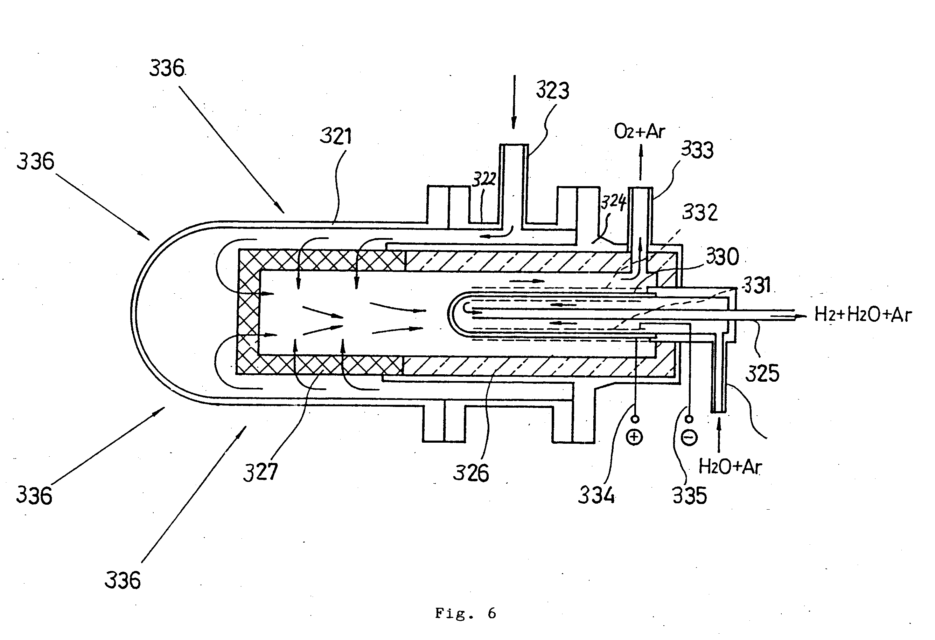

Next, another preferred embodiment of the present invention will be explained with reference to Fig. 6. As shown in Fig. 6, this preferred embodiment is different from the above-described preferred embodiment in that the apparatus is constructed in such manner that an oxygen electrode 332 of an electrolyzing cell 330 made of material pervious to O₂ ion (ion conduction material) is mounted to the outside of the electrolyzing cell 330, while a hydrogen electrode 331 is mounted to the inside of the electrolyzing cell 330, air is heated by sunlight, and the electrolyzing cell 330 is heated by sensible heat.

According to this other preferred embodiment, like the preferred embodiment described further above, heating under a pressurized condition is possible.

As will be apparent from the detailed description of the preferred embodiments of the present invention above, in the radiant gas heating apparatus used in the present invention, since a porous ceramic section is used as a thermal medium rather than liquid metal, practically the heating temperature is not limited, and a high temperature, that is, a high output power can be obtained.

In addition, because of the fact that as a thermal medium, liquid metal which necessitates circulation is not used, an arrangement and an attitude of an apparatus can be arbitrarily chosen.

Also, in the steam electrolyzing apparatus according to the present invention, owing to the fact that gas before being heated is made to flow through a space between a light receiving section vessel and a porous ceramic section and thereby a temperature of the light receiving section vessel does not rise and a mechanical strength thereof is not degraded, heating under a pressurized condition is possible.

## Claims

1. A steam electrolyzing apparatus which uses a gas heating apparatus (101) having a solar heat condenser (100), said apparatus comprising:
a light focusing section including a porous ceramic section (327) disposed within a transparent light receiving section vessel (321) and disposed to be heatable by radiation,
a flow passageway through which gas is directed and movable from one side of said porous ceramic section (327) to the other side thereof passing through said porous ceramic section (327),
an electrolyzing cell (330) including an oxygen electrode (332) and a hydrogen electrode (331) disposed on inner and outer surfaces of a cylindrical electrolyte, and a heat-insulating vessel (326) covering said electrolyzing cell (330),
said flow passageway is defined between an inner surface of the light receiving section vessel (321) and an outer surface of said porous ceramic section (327), and said electrolyzing cell (330) is heated by high temperature gas flown through said porous ceramic section (327).

2. The steam electrolyzing apparatus according to claim 1, characterized in that an oxygen electrode (332) is disposed on the inner surface of said cylindrical electrolyte, and a hydrogen electrode (331) is disposed on the outer surface of said cylindrical electrolyte.

3. The steam electrolyzing apparatus according to claim 1, characterized in that a hydrogen electrode (331) is disposed on the inner surface of said cylindrical electrolyte, and an oxygen electrode (332) is disposed on the outer surface of said cylindrical electrolyte.

## Patentansprüche

1. Dampfelektrolysiervorrichtung, die eine Gasheizoder -erwärmungsvorrichtung (101) mit einem Solarwärmekondensator (100) verwendet und die umfaßt:
eine Lichtfokussiersektion mit einer porösen Keramiksektion (327), die in einem transparenten Lichtempfangssektionsgefäß (321) angeordnet und durch Strahlung erwärmbar ist,
einen Strömungsdurchgang, durch den Gas geführt wird, um von der einen Seite der porösen Keramiksektion (327) durch diese hindurch und zur anderen Seite der porösen Keramiksektion (327) zu strömen,
eine Elektrolysierzelle (330) mit einer Sauerstoffelektrode (332) und einer Wasserstoffelektrode (331), die auf Innen- und Außenflächen eines zylindrischen Elektrolyten angeordnet sind, und ein die Elektrolysierzelle (330) bedeckendes (bzw. umschließendes) Wärmeisoliergefäß (326),
wobei der Strömungsdurchgang zwischen einer Innenfläche des Lichtempfangssektionsgefäßes (321) und einer Außenfläche der porösen Keramiksektion (327) festgelegt ist und die Elektrolysierzelle (330) durch Hochtemperaturgas, das die poröse Keramiksektion (327) durchströmt, erwärmt wird.

2. Dampfelektrolysiervorrichtung nach Anspruch 1, dadurch gekennzeichnet, daß eine Sauerstoffelektrode (332) an der Innenfläche des zylindrischen Elektrolyten und eine Wasserstoffelektrode (331) an der Außenfläche des zylindrischen Elektrolyten angeordnet sind.

3. Dampfelektrolysiervorrichtung nach Anspruch 1, dadurch gekennzeichnet, daß eine Wasserstoffelektrode (331) an der Innenfläche des zylindrischen Elektrolyten und eine Sauerstoffelektrode (332) an der Außenfläche des zylindrischen Elektrolyten angeordnet sind.

## Revendications

1. Appareil d'électrolyse de vapeur qui utilise un appareil de chauffage de gaz (101) comportant un condenseur thermique solaire (100), ledit appareil comprenant :
une section de focalisation de lumière incluant une section en céramique poreuse (327) disposée dans un conteneur de section de réception de lumière transparent (321) et disposée pour pouvoir être chauffée par rayonnement ;
un passage d'écoulement au travers duquel un gaz est dirigé et peut se déplacer depuis un côté de ladite section en céramique poreuse (327) jusqu'à son autre côté en traversant ladite section en céramique poreuse (327) ;
une cellule d'électrolyse (330) incluant une électrode d'oxygène (332) et une électrode d'hydrogène (331) disposées sur des surfaces interne et externe d'un électrolyte cylindrique, et un conteneur d'isolation thermique (326) qui recouvre ladite cellule d'électrolyse (330) ;
ledit passage d'écoulement est défini entre une surface interne du conteneur de section de réception de lumière (321) et une surface externe de ladite section en céramique poreuse (327), et ladite cellule d'électrolyse (330) est chauffée par un gaz haute température qui circule au travers de ladite section en céramique poreuse (327).

2. Appareil d'électrolyse de vapeur selon la revendication 1, caractérisé en ce qu'une électrode d'oxygène (332) est disposée sur la surface interne dudit électrolyte cylindrique et une électrode d'hydrogène (331) est disposée sur la surface externe dudit électrolyte cylindrique.

3. Appareil d'électrolyse de vapeur selon la revendication 1, caractérisé en ce qu'une électrode d'hydrogène (331) est disposée sur la surface interne dudit électrolyte cylindrique et une électrode d'oxygène (332) est disposée sur la surface externe dudit électrolyte cylindrique.
